# EUROPEAN PATENT SPECIFICATION

(11) **EP 4 111 916 B1**
(45) Date of publication and mention of the grant of the patent: **10.01.2024**
(21) Application number: 21382589.6
(22) Date of filing: 02.07.2021
(51) Int. Cl.: A47J 31/40, A47J 31/42

(54) **GROUND COFFEE DOSING SYSTEM FOR COFFEE MACHINE, AND COFFEE MACHINE INCLUDING SUCH A SYSTEM**
DOSIERSYSTEM FÜR GEMAHLENEN KAFFEE FÜR EINE KAFFEEMASCHINE UND KAFFEEMASCHINE MIT EINEM SOLCHEN SYSTEM
SYSTÈME DE DOSAGE DE CAFÉ MOULU POUR MACHINE À CAFÉ ET MACHINE À CAFÉ COMPRENANT UN TEL SYSTÈME

(43) Date of publication of application: 04.01.2023
(73) Proprietor: SDA FACTORY VITORIA SLU, 01010 Vitoria-Gasteiz (Álava) (ES)
(72) Inventor: ASARTA MARTIN, Eneko, 01010 VITORIA-GASTEIZ (Álava) (ES); ELORZA LAUZURICA, Iñaki, 01010 VITORIA-GASTEIZ (Álava) (ES); LARRAÑAGA CANO, Miguel, Ángel, 01010 VITORIA-GASTEIZ (Álava) (ES)
(74) Representative: Herrero & Asociados, S.L.

(56) References cited:
- EP-A1- 1 040 780
- EP-A1- 3 878 322
- EP-B1- 1 418 831
- US-A1- 2002 002 908

## Description

### OBJECT OF THE INVENTION

The present invention belongs to the field of household appliances, and more specifically coffee machines.

The object of the present invention is a ground coffee dosing system for coffee machines, which permits an adequate contribution of the coffee powder, in its right measure, inside the tank or container conceived for this purpose, avoiding the insertion of coffee without control, guaranteeing an efficient use of the coffee, both from the quantitative and qualitative point of view.

### BACKGROUND OF THE INVENTION

Currently, automatic coffee machines are widely known, which generally have a tank for the storage of ground coffee (in powder form), and in some cases, another additional tank for the storage of coffee beans (whole, unground).

In fact, coffee makers that offer the possibility of preparing coffee with previously ground coffee (in powder form) are becoming more and more common, instead of the grinding being carried out from coffee beans by the coffee grinder included in the coffee makers. In this sense, as already mentioned above, the ground coffee machines have a small tank where the user must add the ground coffee for its subsequent preparation in the infusion chamber of the machine. Generally, said tank incorporates a lid or screw cap, which can be operated by the user, to allow or close the access to the interior of the tank.

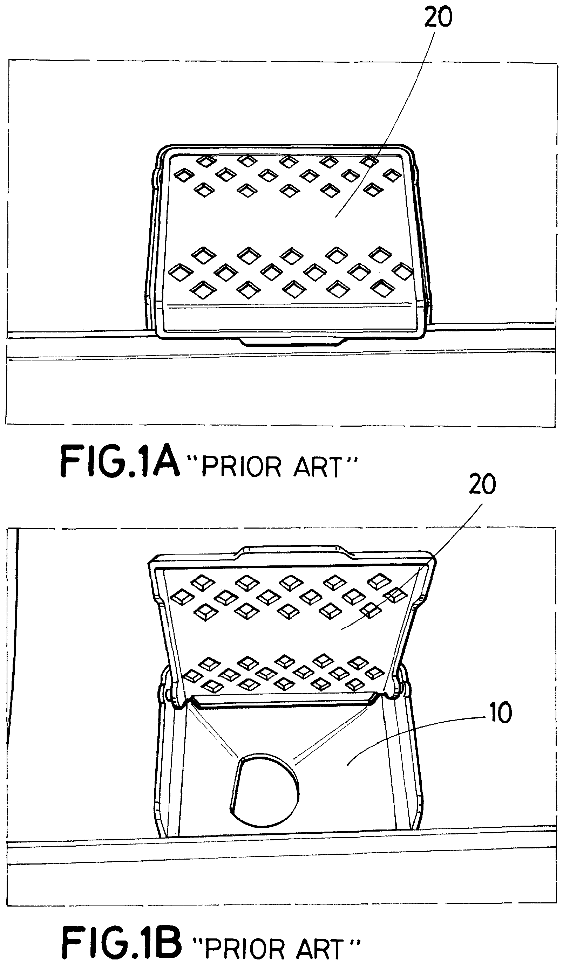

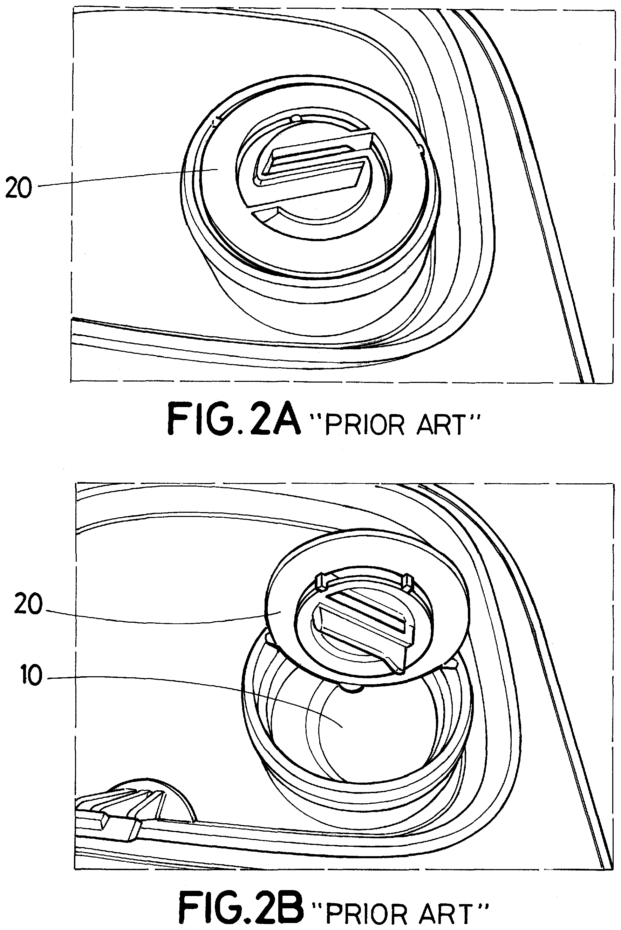

Figures 1A,1B, 2A, 2B show a couple of examples belonging to the state of the art, where the zones of the coffee machines destined to the contribution and insertion of ground coffee can be observed, both with its lid (20) in the closed position and in the open position, respectively. As can be appreciated, once the lid (20) is opened, the user has total access to the interior volume of the tank (10), there being no control or barrier as to the amount of ground coffee added, the user being able to overdo it in the dosage of coffee, as frequently occurs.

Therefore, the technical problem that arises here is that, in the present coffee makers, the coffee powder is added by the user without any type of control or limit as to the dosed amount, so that the user can fall short in relation to the amount of coffee added, not obtaining an optimum coffee in terms of its organoleptic characteristics: aroma, flavor, etc. On the contrary, the user can overdo it, in which case there is an oversaturation of ground coffee in the tank, with the consequent waste and inefficient use of the ground coffee, and therefore increasing the economic cost of each coffee prepared.

Document EP-A-1040780 discloses a ground coffee dosing system according to the preamble of independent claim 1.

### DESCRIPTION OF THE INVENTION

The present invention solves the technical problem previously mentioned, providing a ground coffee dosing system for coffee machine according to independent claim 1, which allows an adequate supply of coffee powder in the tank designed for this purpose, avoiding the uncontrolled and excessive insertion of coffee and guaranteeing an optimum preparation of coffee.

Indeed, the invention allows to obtain an efficient use of the ground coffee, both from the quantitative point of view: dosing of coffee in its right measure; and qualitative: maximum measure recommended for the preparation of an optimal coffee, which allows to appreciate all its organoleptic properties, aroma, flavor, intensity, body or acidity.

More specifically, the dosing system described herein is applicable in automatic coffee machines of the type comprising at least one tank for the insertion of ground coffee, i.e., coffee powder, and a user-operable lid to allow or close access to the interior of said tank.

Thus, with the dosing system of the invention, the lid is fixed to the coffee machine, said lid being tiltable between an opening position and a closing position, and vice versa; where in addition the lid incorporates in its internal surface a receptacle for the housing of a determined quantity of ground coffee.

Thus, in the lid opening position, the user has access only to said receptacle, without the possibility of accessing the inside of the tank. This is so because the receptacle itself, together with the internal wall of the lid, act as a barrier, preventing the user from introducing ground coffee in any place other than inside the receptacle itself.

On the other hand, when the lid is closed, the ground coffee previously lodged inside the receptacle falls by gravity into the interior of the tank. Indeed, the tilting movement of the lid towards its closing causes the receptacle to rotate, specifically at a 90° downward angle, which causes all the coffee contents housed in the receptacle to fall by its own weight into the tank.

Therefore, with the solution described here, a double functionality is obtained:
- On the one hand, unlike current coffee machines, it is possible to prevent manual access to the inside of the ground coffee tank, even with the lid in the open position. This avoids adding coffee without any control by the user, which currently represents a clear waste of coffee, linked to a higher cost in the medium and long term.
- On the other hand, it is possible to integrate in the lid itself a receptacle with capacity to hold a maximum recommended volume of coffee powder, according to the specifications of each machine, which allows to obtain a quality coffee where all its organoleptic characteristics can be appreciated.

In accordance with another object of the invention, a coffee machine is contemplated which includes the dosing system of the present invention.

### BRIEF DESCRIPTION OF THE DRAWINGS

For a better understanding the above explanation and for the sole purpose of providing an example, some non-limiting drawings are included that schematically depict a practical embodiment.
Figures 1A,1B, 2A, 2B.- Show a pair of examples belonging to the prior art, where the zones of the coffee machines destined to the contribution and insertion of ground coffee (in powder form) can be observed, with the lid (20) in the closed position and in the open position, respectively.
Figure 3.- Shows a perspective view of a coffee machine including the dosing system of the present invention, specifically with its lid in the closed position.
Figure 4.- Shows a perspective view similar to figure 3, but showing the lid of the dosing system in the open position.
Figure 5.- Shows a detail view of the dosing system of the invention.

### PREFERRED EMBODIMENT OF THE INVENTION

An example of a preferred embodiment is described below, mentioning the figures above, without limiting or reducing the scope of protection of the present invention.

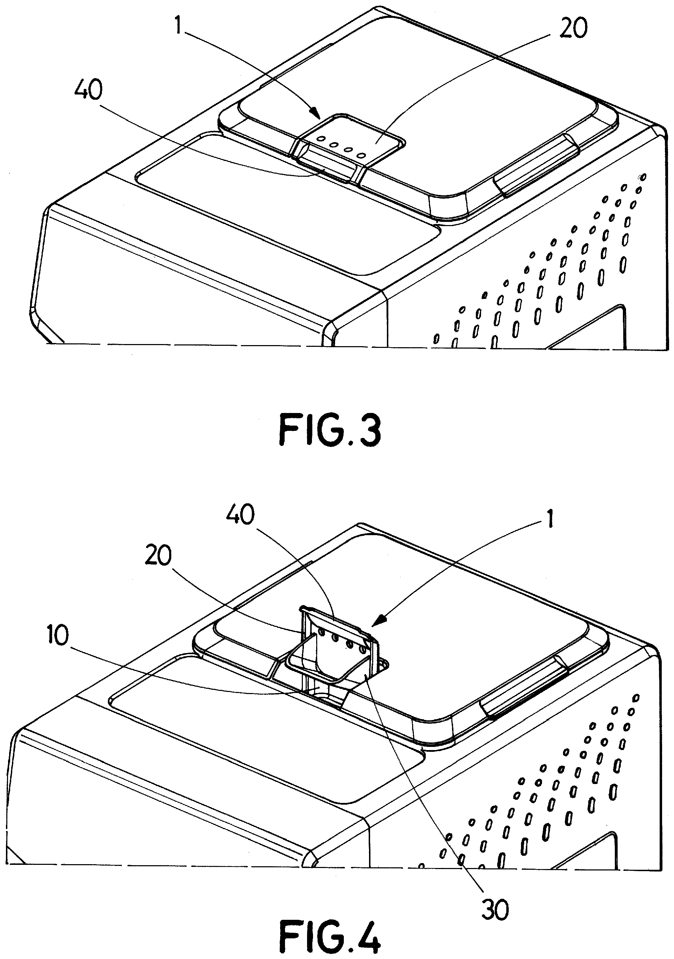

Figures 3, 4 and 5 show the dosing system (1) of the invention, which comprises in this preferred embodiment:
- a lid (20) fixed to the coffee machine and which is tiltable between an opening position and a closing position, and vice versa;
- a receptacle (30) fixed to the internal surface of the lid (20), for the insertion of a determined quantity of ground coffee;
- gripping means (40) for facilitating the opening and closing of the lid (20); and
- a plurality of holes (50) for ventilation and/or aeration of the interior of the tank (10).

Figure 4 shows the opening position of the lid (20), in which the user has access only to the receptacle (30), without the possibility of accessing the inside of the tank (10). Indeed, the inner surface of the lid (20) and the receptacle (30) allow to act as a barrier, managing to keep always closed the access to the tank (10), even in this position of opening of the lid (20).

On the other hand, figure 3 shows the closing position of the lid (20), where once the lid (20) is tilted from the opening position, the ground coffee inside the receptacle (30) falls by gravity inside the tank (10), towards the infusion chamber of the machine, for the subsequent preparation of the coffee selected by the user.

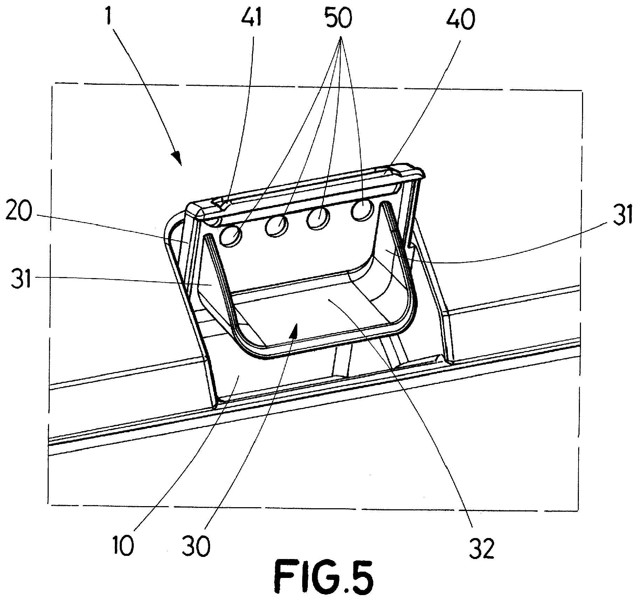

Figures 4 and 5 show that the receptacle (30) has a "U" configuration. In particular, as shown in figure 5, said receptacle (30) has a pair of lateral branches (31) attached to the internal surface of the lid (20), and a base (32) presenting a downward inclination towards the interior of the tank (10), such that a closed enclosure is defined between said lateral branches (31) and base (32) for the insertion of a maximum quantity of ground coffee. These technical features do not imply something trivial or random, but pursue a well identified double objective:
- Providing a volume of space in which to insert a right and adequate amount of ground coffee, constituting its own lateral walls to prevent the coffee from overflowing outwards;
- Facilitating the descent and fall of the ground coffee lodged in the receptacle towards the interior of the tank, once the lid has been tilted towards its closing position.

Furthermore, as can be seen in Figures 4 and 5, the lateral branches (31) of the receptacle (30) have a quasi-triangular shape, in the manner of marine dorsal fins. This allows that in the opening position of the lid (20), the upper edge of the receptacle (30), "U" edge, is maintained in the horizontal plane, facilitating the user the operation of inserting coffee inside said receptacle (30).

Moreover, as clearly seen in Figure 5, it is provided that both the side branches (31) and the base (32) of the receptacle (30) have their outer edge blunt and rounded, without sharp corners. In this way, any possible cut, scratch or damage to the user is avoided, at the same time that the descent and fall of the ground coffee towards the interior of the tank (10) is favored, without any coffee remains stuck or adhered to the internal surface of the receptacle (30).

With respect to the gripping means (40), these comprise an inclined surface located on one side of the lid (20), said inclined surface presenting in its lower zone a horizontal projection (41), shown in figure 5, to facilitate to the user the tilting movement of the lid (20) between the closing position and the opening position, and vice versa.

According to the embodiment shown in figures 3, 4 and 5, the lid (20) presents four holes (50) arranged in an aligned manner between the two lateral branches (31) of the receptacle (30), in an upper zone of the lid (20), said lid (20) being in the opening position. This strategic position of the holes (50) allows aerating and ventilating the interior of the tank (10), at the same time allowing the insertion of ground coffee inside the receptacle (30), without said coffee escaping through said holes (50).

Finally, the main advantages obtained by the dosing system of the present invention are listed below:
- Control of the amount of ground coffee dosed inside the tank.
- Safety. Access to the inside of the tank is always kept closed, even with the lid in the open position. This avoids accidents or the fall of personal objects (rings, small spoons, etc.) inside the tank, without possible recovery.
- Preparation of an optimal coffee, with the right amount of coffee for each type of coffee and machine, allowing to appreciate all the organoleptic properties of the coffee: aroma, flavor, body or acidity.
- Integration of the receptacle in the lid itself, so that the movement of the lid also causes the rotation of the receptacle.
- Structural simplicity, integrating several functionalities in a single solution, minimizing the number of parts and components.

## Claims

1. Ground coffee dosing system (1) for coffee machine, the coffee machine comprising at least one tank (10) for ground coffee, the dosing system (1) comprising a lid (20) that can be operated by the user to allow or close the access to the inside of said tank (10),
- wherein the lid (20) is able to be fixed to the coffee machine and is tiltable between an open position and a closed position, and vice versa;
- wherein the lid (20) incorporates on its inner surface a receptacle (30) for holding a certain quantity of ground coffee;
such that in the opening position of the lid (20), the user has access only to said receptacle (30), without the possibility of accessing the interior of the tank (10),
and such that in the closing position of the lid (20), the ground coffee lodged inside the receptacle (30) falls by gravity into the interior of the tank (10);
the dosing system (1) being **characterized in that** the lid (20) additionally comprises a plurality of holes (50) for ventilation and/or aeration of the interior of the tank (10).

2. Ground coffee dosing system (1), according to claim 1, **characterized in that** the receptacle (30) presents a "U" configuration, having a pair of lateral branches (31) attached to the inner surface of the lid (20), and a base (32) presenting a downward inclination towards the inside of the tank (10), such that a closed enclosure is defined between said side branches (31) and base (32) for the insertion of a maximum quantity of ground coffee.

3. Ground coffee dosing system (1), according to claim 2, **characterized in that** both the lateral branches (31) and the base (32) of the receptacle (30) have their outer edge blunt and rounded, without sharp corners.

4. Ground coffee dosing system (1), according to claim 2, **characterized in that** the lateral branches (31) of the receptacle (30) have a quasi-triangular shape.

5. Ground coffee dosing system (1), according to claim 1, **characterized in that** the lid (20) additionally comprises gripping means (40) for facilitating the opening and closing of said lid (20).

6. Ground coffee dosing system (1), according to claim 5, **characterized in that** the gripping means (40) comprise an inclined surface located on one side of the lid (20), said inclined surface having in its lower zone a horizontal projection (41) to facilitate the user the tilting movement of the lid (20) between the closing position and the opening position, and vice versa.

7. Ground coffee dosing system (1), according to claim 1, **characterized in that** the lid (20) presents four holes (50) arranged in an aligned manner between the two lateral branches (31) of the receptacle (30), in an upper zone of the lid (20), said lid (20) being in the open position.

8. Ground coffee dosing system (1), according to claim 1, **characterized in that** it is able to be installed on an upper and external face of the coffee machine.

9. Coffee machine comprising the ground coffee dosing system (1) described in any one of the preceding claims 1-8.

## Patentansprüche

1. Mahlkaffee-Dosiersystem (1) für eine Kaffeemaschine, wobei die Kaffeemaschine mindestens einen Tank (10) für Mahlkaffee umfasst, wobei das Dosiersystem (1) einen Deckel (20) umfasst, der durch den Benutzer betätigt werden kann, um den Zugang zum Inneren des besagten Tanks (10) zu ermöglichen oder zu schließen,
- wobei der Deckel (20) an der Kaffeemaschine befestigbar ist und zwischen einer offenen Position und einer geschlossenen Position schwenkbar ist und umgekehrt;
- wobei der Deckel (20) auf seiner Innenfläche einen Behälter (30) zur Aufnahme einer bestimmten Menge an Mahlkaffee beherbergt;
- so dass in der Öffnungsposition des Deckels (20) der Benutzer nur Zugang zu besagtem Behälter (30) hat, ohne die Möglichkeit, Zugang zum Inneren des Tanks (10) zu haben,
- und so dass in der Schließposition des Deckels (20), der im Inneren des Behälters (30) befindliche Mahlkaffee durch Schwerkraft in das Innere des Tanks (10) fällt;
- das Dosiersystem (1) **dadurch gekennzeichnet ist, dass** der Deckel (20) zusätzlich eine Vielzahl von Löchern (50) zur Ventilation und/oder Belüftung des Inneren des Tanks (10) umfasst.

2. Mahlkaffee-Dosiersystem (1) gemäß Anspruch 1, **dadurch gekennzeichnet, dass** der Behälter (30) eine "U"-Konfiguration darstellt, aufweisend ein Paar von seitlichen Abschnitten (31), die an der Innenfläche des Deckels (20) befestigt sind, und eine Basis (32), die eine nach unten gerichtete Neigung zum Inneren des Tanks (10) hin darstellt, so dass ein geschlossenes Gehäuse zwischen besagten seitlichen Abschnitten (31) und Basis (32) zum Einfüllen einer maximalen Menge von Mahlkaffee definiert wird.

3. Mahlkaffee-Dosiersystem (1) gemäß Anspruch 2, **dadurch gekennzeichnet, dass** sowohl die seitlichen Abschnitte (31) als auch die Basis (32) des Behälters (30) eine stumpfe und abgerundete Außenkante ohne scharfe Ecken aufweisen.

4. Mahlkaffee-Dosiersystem (1) gemäß Anspruch 2, **dadurch gekennzeichnet, dass** die seitlichen Abschnitte (31) des Behälters (30) eine quasi-dreieckige Form aufweisen.

5. Mahlkaffee-Dosiersystem (1) gemäß Anspruch 1, **dadurch gekennzeichnet, dass** der Deckel (20) zusätzlich Greifmittel (40) umfasst, zum Erleichtern des Öffnens und Schließens des besagten Deckels (20).

6. Mahlkaffee-Dosiersystem (1) gemäß Anspruch 5, **dadurch gekennzeichnet, dass** die Greifmittel (40) eine schräge Oberfläche umfassen, die sich auf einer Seite des Deckels (20) befinden, wobei besagte schräge Oberfläche in ihrem unteren Bereich einen horizontalen Vorsprung (41) aufweist, zum Erleichtern der Kippbewegung des Deckels (20) für den Benutzer zwischen der Schließposition und der Öffnungsposition und umgekehrt.

7. Mahlkaffee-Dosiersystem (1) gemäß Anspruch 1, **dadurch gekennzeichnet, dass** der Deckel (20) vier Löcher (50) aufweist, die fluchtend zwischen den beiden seitlichen Abschnitten (31) des Behälters (30) in einem oberen Bereich des Deckels (20) angeordnet sind, wobei besagter Deckel (20) in der offenen Position ist.

8. Mahlkaffee-Dosiersystem (1) gemäß Anspruch 1, **dadurch gekennzeichnet, dass** es an einer oberen und äußeren Fläche der Kaffeemaschine installiert werden kann.

9. Kaffeemaschine, umfassend das Mahlkaffee-Dosiersystem (1), beschrieben in einem der vorhergehenden Ansprüche 1-8.

## Revendications

1. Système de dosage de café moulu (1) pour machine à café, la machine à café comprenant au moins un réservoir (10) pour du café moulu, le système de dosage (1) comprenant un couvercle (20) qui peut être actionné par l'utilisateur pour autoriser ou fermer l'accès à l'intérieur dudit réservoir (10),
- dans lequel le couvercle (20) est apte à être fixé à la machine à café et est inclinable entre une position ouverte et une position fermée, et vice versa ;
- dans lequel le couvercle (20) incorpore, sur sa surface interne, un réceptacle (30) servant à contenir une certaine quantité de café moulu ;
de sorte que dans la position d'ouverture du couvercle (20), l'utilisateur ait accès uniquement audit réceptacle (30), sans la possibilité d'accéder à l'intérieur du réservoir (10),
et de sorte que dans la position de fermeture du couvercle (20), le café moulu logé à l'intérieur du réceptacle (30) chute par gravité dans l'intérieur du réservoir (10) ;
le système de dosage (1) étant **caractérisé en ce que** le couvercle (20) comprend de plus une pluralité de trous (50) pour la ventilation et/ou l'aération de l'intérieur du réservoir (10).

2. Système de dosage de café moulu (1), selon la revendication 1, **caractérisé en ce que** le réceptacle (30) présente une configuration en « U », ayant une paire de branches latérales (31) fixées à la surface interne du couvercle (20), et une base (32) présentant une inclinaison vers le bas vers l'intérieur du réservoir (10), de sorte qu'une enceinte fermée soit définie entre lesdites branches latérales (31) et la base (32) pour l'insertion d'une quantité maximale de café moulu.

3. Système de dosage de café moulu (1), selon la revendication 2, **caractérisé en ce que** à la fois les branches latérales (31) et la base (32) du réceptacle (30) ont leur bord externe émoussé et arrondi, sans angles vifs.

4. Système de dosage de café moulu (1), selon la revendication 2, **caractérisé en ce que** les branches latérales (31) du réceptacle (30) ont une forme quasi triangulaire.

5. Système de dosage de café moulu (1), selon la revendication 1, **caractérisé en ce que** le couvercle (20) comprend de plus des moyens de préhension (40) pour faciliter l'ouverture et la fermeture dudit couvercle (20)

6. Système de dosage de café moulu (1), selon la revendication 5, **caractérisé en ce que** les moyens de préhension (40) comprennent une surface inclinée située sur un côté du couvercle (20), ladite surface inclinée ayant, dans sa zone inférieure, une saillie horizontale (41) pour faciliter à l'utilisateur le mouvement d'inclinaison du couvercle (20) entre la position de fermeture et la position d'ouverture, et vice versa.

7. Système de dosage de café moulu (1), selon la revendication 1, **caractérisé en ce que** le couvercle (20) présente quatre trous (50) agencés d'une manière alignée entre les deux branches latérales (31) du réceptacle (30), dans une zone supérieure du couvercle (20), ledit couvercle (20) étant dans la position ouverte.

8. Système de dosage de café moulu (1), selon la revendication 1, **caractérisé en ce qu'**il est apte à être installé sur une face supérieure et externe de la machine à café.

9. Machine à café comprenant le système de dosage de café moulu (1) décrit dans l'une quelconque des revendications 1 à 8 précédentes.
